# EUROPEAN PATENT APPLICATION

(11) **EP 4 495 791 A1**
(43) Date of publication of application: **22.01.2025**
(21) Application number: 24188499.8
(22) Date of filing: 15.07.2024
(51) Int. Cl.: G06F 13/30

(54) **DMA PMM FOR TRANSFER GROUPS**

(30) Priority: 18.07.2023 CN 202310882540
(71) Applicant: Robert Bosch GmbH, 70442 Stuttgart (DE)
(72) Inventor: ZHANG, Shijie, Suzhou, Jiangsu, 215021 (CN)

(57) **Abstract**

The present disclosure provides a method for managing transfer groups at a DMA PMM using a hardware-linked list, comprising: sequentially querying and updating the transfer status of each transfer group in the transfer group queue according to the priorities of the transfer groups; configuring the transfer group queue based on the results of the query and the priorities of the transfer groups; and triggering the DMA to transfer the transfer group queue. The present disclosure enables priority management for transfer groups used in communication between chips without the need to add hardware modules, thereby avoiding an increase in chip size and manufacturing costs due to the addition of hardware modules. Furthermore, the DMA PMM provided by the present disclosure can be flexibly applied to various different MCUs.

## Description

### Technical Field

The present disclosure generally relates to microcontroller units (MCUs), and more specifically, to a Priority Management Module (PMM) within microcontroller units (MCUs).

### Background Art

In automotive electronic products, communication between multiple chips is widely used in body electronic stability systems such as ESP, Ibooster, IPB, DPB, and other products.

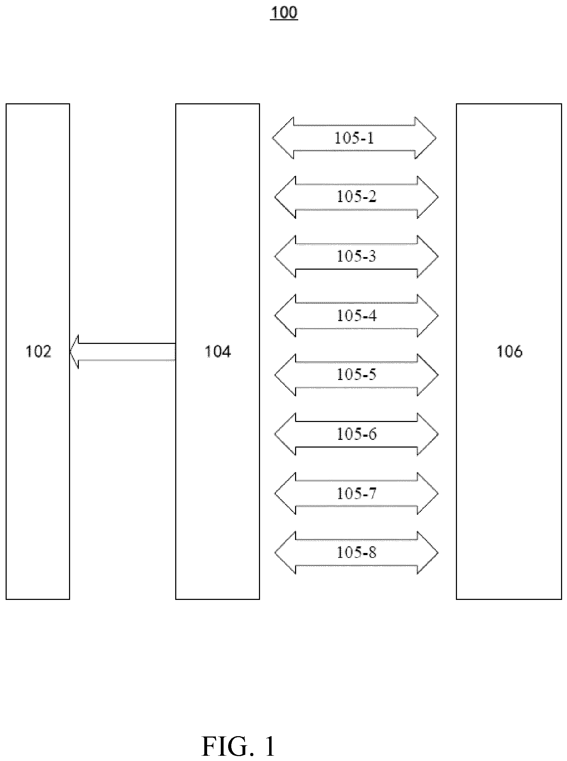

To facilitate communication between chips, some existing microcontroller units (MCUs) include dedicated hardware modules: Priority Management Module (PMM). Specifically, as shown in FIG. 1, the MCU includes Direct Memory Access (DMA) 106, PMM hardware module 104, and serial data transfer module 102. Communication between chips (for example, between a master such as an MCU and a slave such as an ASIC) is divided into multiple transfer groups (abbreviated as TG) 105-1 to 105-8. The PMM hardware module 104 manages the priorities of these transfer groups 105-1 to 105-8 and then configures the transfer groups 105-1 to 105-8 in a queue form according to their priority order for transfer to the serial data transfer module 102. Thus, multiple transfer groups 105-1 to 105-8 can be transferred sequentially according to their priority order, avoiding preemption and congestion in the transfer channel.

However, if the aforementioned MCU intends to omit the PMM hardware module to reduce chip size and lower chip costs, it needs to achieve the priority management function through other means. Additionally, when using other MCUs different from the aforementioned MCU in other products (e.g., ESP, IPB, etc.), these other MCUs currently lack a Priority Management Module (PMM), and additional design and costs are required for these other MCUs to achieve the priority management function for the transfer groups.

Therefore, it is desirable for the MCU to manage the priorities of transfer groups without the PMM hardware module while minimizing design and manufacturing costs.

### Summary of the Invention

The following introduction is provided in order to introduce selected concepts in a simple manner, and these concepts will be further described in the detailed description below. The introduction is not intended to highlight the key or necessary features of the claimed subject matter, nor is it intended to limit the scope of the claimed subject matter.

The present disclosure provides a DMA PMM for caching and priority management of transfer groups using a hardware-linked list (e.g., DMA linked list) configured by software on the DMA side. The DMA linked list is a common hardware unit in an MCU.

According to one aspect of the present disclosure, a method for managing transfer groups using a hardware-linked list at the DMA PMM is provided, comprising: a querying step: sequentially querying and updating the transfer status of each transfer group in the transfer group queue according to the priorities of the transfer groups; a configuring step: configuring the transfer group queue based on the results of the query and the priorities of the transfer groups; and, a triggering step: triggering the DMA to transfer the transfer group queue.

According to one aspect of the present disclosure, a DMA PMM for managing transfer groups using a hardware-linked list is provided, comprising: A querying module for sequentially querying and updating the transfer status of each transfer group in the transfer group queue according to the priorities of the transfer groups; a configuring module for configuring the transfer group queue based on the results of the query and the priorities of the transfer groups; and a triggering module for triggering the DMA to transfer the transfer group queue.

According to one aspect of the present disclosure, an apparatus for transferring groups is provided, comprising: a microcontroller unit; and a memory storing machine-executable instructions, wherein the machine-executable instructions, when executed by the microcontroller unit, cause the microcontroller unit to perform the method described according to multiple aspects of the present disclosure.

According to one aspect of the present disclosure, a non-transitory machine-readable storage medium storing machine-executable instructions, wherein the machine-executable instructions, when executed by the microcontroller unit, cause the microcontroller unit to perform the method described according to multiple aspects of the present disclosure.

The beneficial effects of the present disclosure include: The MCU can still manage the priority of SPI transfer groups even without the PMM hardware module, thereby reducing the size of the MCU. Additionally, for other MCUs that originally do not have a PMM hardware module, the present disclosure can also achieve priority management of transfer groups without redesigning their hardware, avoiding the increase in chip size and manufacturing costs due to the addition of hardware modules. Moreover, the DMA PMM designed according to the present disclosure can be applied to various commercially available MCUs.

### Description of Accompanying Drawings

The nature and advantages of the content of the present disclosure may be further understood by referring to the following accompanying drawings. To facilitate understanding, in the drawings, similar components or features may have the same reference numerals. It can be anticipated that elements disclosed in one aspect may be used in other aspects without specific mention. However, it should be noted that the drawings only illustrate certain exemplary aspects of the present disclosure and should not be considered as limiting its scope, as the description may allow for other equally effective aspects.
FIG. 1 shows a block diagram of an MCU containing a PMM hardware module in the prior art.
FIG. 2 shows a block diagram of a microcontroller unit (MCU) containing a DMA PMM according to one example of the present disclosure.
FIG. 3 shows a flowchart of priority management for transfer groups according to one example of the present disclosure.
FIG. 4 shows a schematic diagram of priority management for transfer groups by a DMA PMM according to one example of the present disclosure.
FIG. 5 shows a schematic diagram of a data structure in a DMA PMM according to one example of the present disclosure.

### Specific Embodiments

The following description provides an example of DMA PMM and does not limit the scope, applicability, or examples set forth in the claims. The functions and arrangements of the elements discussed can be altered without departing from the scope of the present disclosure. Various examples may omit, replace, or add various processes or components as appropriate. For instance, the described methods may be performed in an order different from that described, and various steps may be added, omitted, or combined. Moreover, features described for some examples may be combined in other examples.

For example, any number of aspects described herein may be used to implement methods or apparatuses. Additionally, the scope of the present disclosure is intended to cover such apparatuses or methods implemented using other structures, functions, or structures and functions as supplements or alternatives to the various aspects of the present disclosure described herein. It should be understood that any aspect of the present disclosure herein may be embodied by one or more elements of the claims. The term "exemplary" as used herein means "serving as an example, instance, or illustration". Any aspect described as "exemplary" is not necessarily to be construed as preferred or advantageous over other aspects.

For ease of description, the following provides an exemplary description using the application scenario of SPI communication. However, by way of example and not limitation, it should be understood that the present disclosure may also apply to other serial communications (including but not limited to, for example, I2C, UART, etc.).

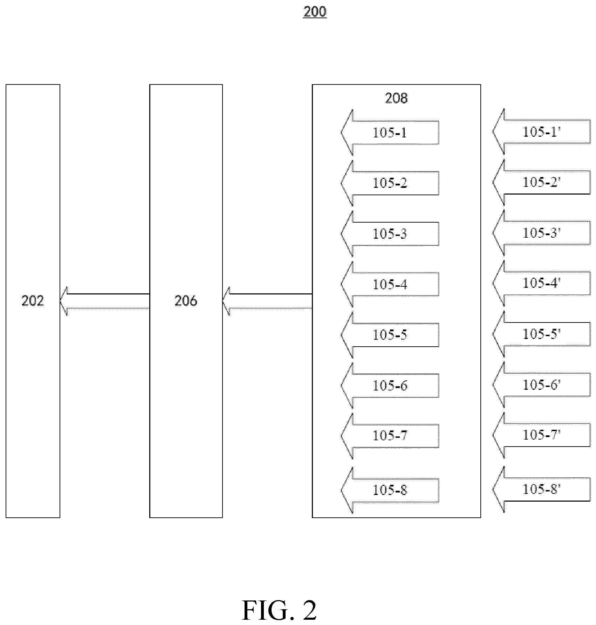

FIG. 2 shows a block diagram of a microcontroller unit (MCU) 200 containing a DMA PMM according to one example of the present disclosure. The MCU 200 includes an SPI transmit (TX) module 202, DMA 206, and DMA PMM 208.

SPI communication between chips is divided into multiple transfer groups (abbreviated as TGs).

Similar to the functionality of SPI PMM 104 in FIG. 1, DMA PMM 208 can manage the priorities of multiple transfer groups. For example, when new TGs 105-1'~105-8' arrive, DMA PMM 208 configures the new TGs 105-1'~105-8' into the queue of TGs 105-1-105-8 according to priority order. The DMA PMM 208 includes software programs and hardware-linked lists (e.g., DMA linked lists). The software programs include: sequentially querying and updating the transfer status of each transfer group in the transfer group queue according to the priorities of the transfer groups (querying module); configuring the transfer group queue based on the results of the query and the priorities of the transfer groups (configuring module); and triggering the DMA to transfer the transfer group queue (triggering module). Completing the transfer of one TG in the TG queue will trigger the start of the transfer of the next TG.

DMA 206, in response to a hardware trigger request (e.g., an SPI request), automatically transfers the queue of TGs 105-1-105-8 from the source address to the target address in the SPI transmit (TX) module 202 through the DMA channel. Each DMA channel has a hardware-linked list (Chain) mode, also known as a linked list mode.

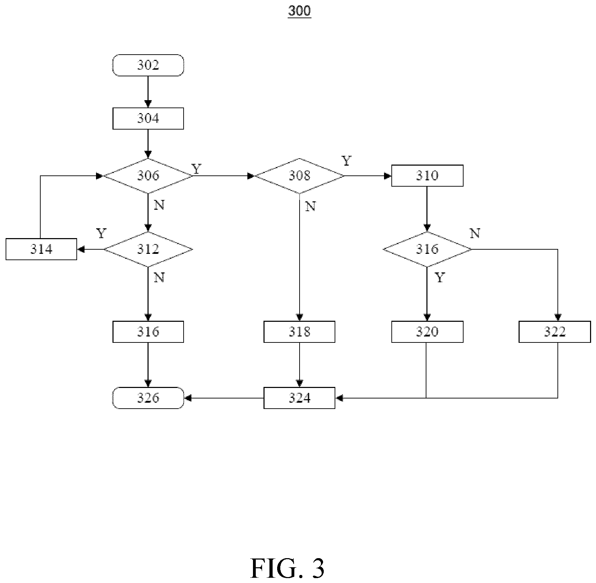

FIG. 3 shows a flowchart 300 of priority management for transfer groups according to one example of the present disclosure. Flowchart 300, implemented using the DMA PMM 208 shown in FIG. 2, includes multiple steps 302-326.

In step 302, the DMA PMM 208 receives a request for transferring a new TG via SPI.

In step 304, the DMA PMM 208 initiates an iterator. The iterator is used to record the transfer status of TGs in the current TG queue. The transfer status includes: completed transfer, in-progress transfer, and not yet transferred.

In step 306, the DMA PMM 208 checks whether the DMA 206 is idle (i.e., DMA 206 is not transferring any TG). If DMA 206 is not idle, proceed to step 308; otherwise, proceed to step 312.

In step 312, the DMA PMM 208 determines whether there is a next iterator, i.e., whether there is another TG in the current TG queue. If there is another TG in the current TG queue, proceed to step 314; otherwise, proceed to step 316.

In step 314, the DMA PMM 208 queries the transfer status of the next TG in the current TG queue, then returns to step 306 to continue checking if the DMA 206 is idle.

The loop of steps 306, 312, and 314 enables the DMA PMM 208 to sequentially query and update the transfer status (e.g., completed transfer, in-progress transfer, and not yet transferred) of each TG in the current TG queue according to priority.

In step 316, the DMA PMM 208 determines that the entire TG queue has been transferred and that DMA 206 is idle. Thus, the DMA PMM 208 can trigger DMA 206 to transfer the new TG, and the process ends (step 326).

In step 308, the DMA PMM 208 determines whether a hardware-linked list (hereinafter referred to as the linked list) exists. If the linked list exists, proceed to step 310; otherwise, proceed to step 318.

In step 310, the DMA PMM 208 compares the priority of the new TG with those of all TGs in the linked list, then proceeds to step 316.

In step 316, the DMA PMM 208 determines whether to insert the new TG into the linked list based on the comparison results. Specifically, if the priority of the new TG is higher than those of one or more TGs in the linked list that have not yet been transferred, proceed to step 320. The DMA PMM 208 configures the new TG before the TG with lower priority that has not yet been transferred and after the TG with lower priority that is currently being transferred. Then, the DMA PMM 208 updates the linked list information (step 324) and ends the process (step 326). If the priority of the new TG is lower than those of all TGs in the linked list, proceed to step 322. The DMA PMM 208 configures the new TG after all TGs in the linked list, then updates the linked list information (step 324) and ends the process (step 326).

In step 318, the DMA PMM 208 directly configures the new TG into the linked list for transfer by the DMA 206, then updates the linked list information (step 324) and ends the process (step 326).

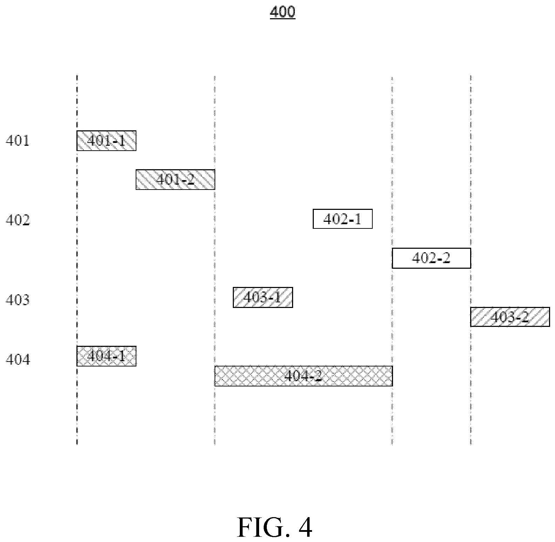

FIG. 4 shows a schematic diagram 400 of priority management for transfer groups by a DMA PMM according to one example of the present disclosure. The transfer groups include TG 401, TG 402, TG 403, and TG 404. The priorities from high to low are as follows: TG 401 > TG 402 > TG 403 > TG 404.

As shown in FIG. 4, the DMA PMM first simultaneously receives a transfer request for TG 401 (block 401-1) and a transfer request for TG 404 (block 404-1). Since the priority of TG 401 is higher than that of TG 404, TG 401 is transferred first (block 401-2), followed by TG 404 (block 404-2).

During the transfer of TG 404, the DMA PMM sequentially receives a transfer request for TG 403 (block 403-1) and a transfer request for TG 402 (block 402-1). Although the priorities of TG 402 and TG 403 are higher than that of TG 404, the transfer of TG 404 (block 404-2) is not interrupted. The DMA PMM configures TG 402 and TG 403 into the linked list in order of priority, waiting for transfer.

After the transfer of TG 404 (block 404-2) is completed, TG 402 (block 402-2) and TG 403 (block 403-2) in the linked list are transferred sequentially.

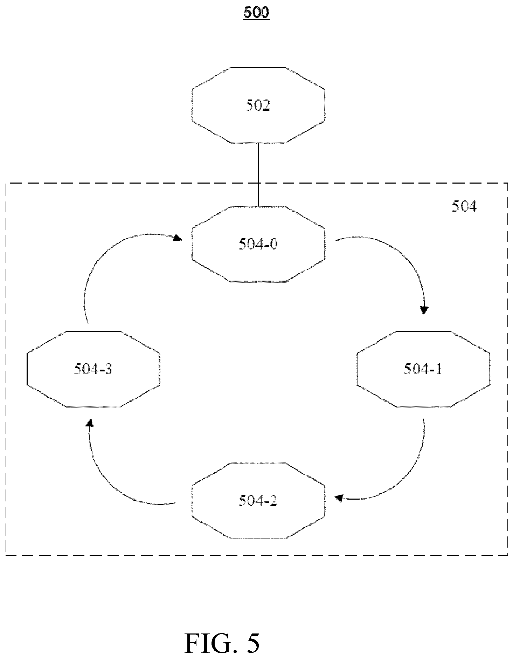

FIG. 5 shows a schematic diagram 500 of a data structure in a DMA PMM according to one example of the present disclosure.

As described above, the DMA PMM maintains the information of TGs and the linked list. The data structure of the DMA PMM includes a register 502 and a linked list 504. For simplicity, and by way of example rather than limitation, FIG. 5 describes the linked list with a length of 4.

As shown in FIG. 5, the DMA PMM includes a register 502 and a linked list 504. The linked list 504 includes a node 504-0, a node 504-1, a node 504-2, and a node 504-3.

First, the DMA PMM initializes the linked list 504. Specifically, the source addresses and destination addresses in the nodes 504-0 to 504-3 are set to dummy values, and the LLI mode in nodes 504-0 to 504-3 is set to off to avoid program errors caused by source and destination addresses pointing to unknown areas. Additionally, each node includes bidirectional pointers (including: forward pointer *prev and backward pointer *next) to point to the entry address of the previous node and the entry address of the next node, respectively, thus forming a circular linked list 504 from node 504-0 to node 504-3. For example, as shown in FIG. 5, the forward pointer *prev in the node 504-0 points to the entry address of the node 504-3, and the backward pointer *next points to the entry address of the node 504-1; the forward pointer *prev in the node 504-1 points to the entry address of the node 504-0, and the backward pointer *next points to the entry address of the node 504-2; the forward pointer *prev in the node 504-2 points to the entry address of the node 504-1, and the backward pointer *next points to the entry address of the node 504-3; the forward pointer *prev in the node 504-3 points to the entry address of the node 504-2, and the backward pointer *next points to the entry address of the node 504-0.

Then, the DMA PMM can start priority management of the received TGs.

When the DMA PMM receives the first frame TG 1, the DMA PMM loads the first frame TG 1 directly into register 502 for the DMA to transfer it to the SPI TX register. Specifically, the DMA PMM sets the source address in the register 502 to the source address of the first frame TG 1, sets the destination address in the register 502 to the address where the first frame TG 1 will be transferred to the SPI TX register, sets the LLI mode in the register 502 to on, and sets the backward pointer *next in the register 502 to point to the entry address of the node 504-0.

During the transfer of the first frame TG 1, if the DMA PMM receives the second frame TG 2, the DMA PMM configures the second frame TG 2 into node 504-0 to wait for transfer. Specifically, the DMA PMM sets the source address in the node 504-0 to the source address of the second frame TG 2, sets the destination address in the node 504-0 to the address where the second frame TG 2 will be transferred to the SPI TX register, and sets the LLI mode in the node 504-0 to on.

After the transfer of the first frame TG 1 is completed, if the DMA PMM receives the second frame TG 2, the DMA PMM loads the second frame TG 2 directly into the register 502 for the DMA to transfer it to the SPI TX register.

When the first frame TG 1 in register 502 is being transferred and the second frame TG 2 in the node 504-0 has not yet been transferred, if the DMA PMM receives the third frame TG 3, the DMA PMM compares the priority of the second frame TG 2 and the third frame TG 3. If the priority of the second frame TG 2 is higher than that of the third frame TG 3, the DMA PMM configures the third frame TG 3 into the node 504-1. If the priority of the second frame TG 2 is lower than that of the third frame TG 3, the DMA PMM changes the position of the second frame TG 2 in the linked list 504, i.e., the DMA PMM moves the second frame TG 2 from the node 504-0 to the node 504-1 and configures the third frame TG 3 into the node 504-0.

When the transfer of the first frame TG 1 in the register 502 is completed and the second frame TG 2 in the node 504-0 is being transferred, if the DMA PMM receives the third frame TG 3, even if the priority of the second frame TG 2 is lower than that of the third frame TG 3, the DMA PMM neither interrupts the transfer of the second frame TG 2 nor changes the position of the second frame TG 2 in the linked list 504 but configures the third frame TG 3 into the node 504-1.

When the transfer of the first frame TG 1 in the register 502 is completed, the second frame TG 2 in the node 504-0 is being transferred, and the third frame TG 3 in the node 504-1 has not yet been transferred, if the DMA PMM receives the fourth frame TG 4, the DMA PMM compares the priorities of the third frame TG 3 and the fourth frame TG 4. If the priority of the third frame TG 3 is higher than that of the fourth frame TG 4, the DMA PMM configures the fourth frame TG 4 into the node 504-2. If the priority of the third frame TG 3 is lower than that of the fourth frame TG 4, the DMA PMM changes the position of the third frame TG 3 in the linked list 504, i.e., moves the third frame TG 3 from the node 504-1 to the node 504-2 and configures the fourth frame TG 4 into the node 504-1.

When the transfer of the first frame TG 1 in the register and the second frame TG 2 in the node 504-0 is completed, and the third frame TG 3 in the node 504-1 is being transferred, if the DMA PMM receives the fourth frame TG 4, even if the priority of the third frame TG 3 is lower than that of the fourth frame TG 4, the DMA PMM neither interrupts the transfer of the third frame TG 3 nor changes the position of the third frame TG 3 in the linked list 504 but configures the fourth frame TG 4 into the node 504-2.

Therefore, the priority management rule of the DMA PMM for TGs is: configure the TG with higher priority before the TG with lower priority that has not yet been transferred and after the TG with lower priority that is being transferred.

Note that whenever a TG in the register or a node completes transfer, the DMA PMM resets the source address and destination address in the register or the node where the TG is located to dummy values and resets the LLI mode to off to avoid program errors caused by source and destination addresses pointing to unknown areas.

After all TGs in register 502 and the entire linked list 504 have completed transfer, if the DMA PMM receives a new TG, the DMA PMM directly configures the new TG into the register 502 and then configures the subsequently received TGs according to the aforementioned priority management rule, starting a new round of SPI transfer.

It should be understood that the modules or units shown in FIG. 5 are merely exemplary, and one or more modules or units may be added or removed as needed in practical applications. For example, optionally, the register 502 may be omitted, and the DMA PMM may configure the newly received transfer groups only in the linked list 504 according to the aforementioned priority management rule to form a transfer group queue. Additionally, the length of the linked list 504 is variable, i.e., the number of nodes in the linked list 504 is variable.

The present disclosure also provides an apparatus for transfer groups (not shown), which includes a microcontroller unit and a memory, wherein the memory is used to store machine-executable instructions, and the machine-executable instructions, when executed by the microcontroller unit, cause the microcontroller unit to perform the method for transfer groups according to the examples of the present disclosure.

The present disclosure also provides a non-transitory machine-readable storage medium storing machine-executable instructions, which, when executed by the microcontroller unit, cause the microcontroller unit to perform the method for transfer groups according to the examples of the present disclosure.

It should also be understood that all modules in the above-described apparatus can be implemented in various ways. These modules can be implemented as hardware, software, or a combination thereof. Additionally, any of these modules can be further divided into sub-modules or combined functionally.

Exemplary examples are described above with reference to the specific examples described in the accompanying drawings, but do not represent all examples that may be implemented or fall within the scope of protection of the Claims. Throughout the present Specification, the term "exemplary" means "serving as an example, instance, or illustration" and does not imply "preferred" or "advantageous" over other examples. Specific examples include specific details to facilitate understanding of the described technology. However, these technologies may be implemented without these specific details. In some instances, to avoid causing difficulties in understanding the concepts of the described examples, known structures and devices are shown in block diagram form.

The methods disclosed herein include one or more steps or actions for implementing these methods. It should be understood that all operations in the above-described methods are merely exemplary, and the present disclosure is not limited to any operations or the sequence of these operations in the methods but should encompass all other equivalent transformations under the same or similar concepts. Without departing from the scope of the claims, the method steps and/or actions may be interchanged with one another. In other words, unless a specific order of steps or actions is specified, the order and/or application of specific steps and/or actions may be modified without departing from the scope of the claims.

The above description of the present invention is provided to enable any person skilled in the art to make or use the invention. Various modifications to the present disclosure will be apparent to those skilled in the art, and the general principles and novel features defined herein can be applied to other variations without departing from the protection scope of the present disclosure. Therefore, the present disclosure is not limited to the exemplary examples and designs described herein but is consistent with the broadest scope defined by the principles and novelty features disclosed herein.

## Claims

1. A method for managing transfer groups using a hardware-linked list at a DMA PMM, comprising:
a querying step: sequentially querying and updating the transfer status of each transfer group in the transfer group queue according to the priorities of the transfer groups;
a configuring step: configuring the transfer group queue based on the results of the query and the priorities of the transfer groups; and
a triggering step: triggering the DMA to transfer the transfer group queue.

2. The method according to Claim 1, wherein the transfer status comprises: completed transfer, in-progress transfer, and not yet transferred.

3. The method according to Claim 1, wherein, when the DMA is idle, the triggering step comprises: triggering the DMA to directly transfer a new transfer group.

4. The method according to Claim 1, wherein, when the DMA is not idle, the configuring step comprises: configuring the new transfer group into the transfer group queue to wait for transfer.

5. The method according to Claim 4, wherein the configuring step comprises: when the transfer group queue is empty, directly configuring the new transfer group into the transfer group queue to wait for transfer.

6. The method according to Claim 4, wherein the configuring step comprises:
when the transfer group queue is not empty, configuring the order of the new transfer group in the transfer group queue by comparing the priority of the new transfer group with the priorities of the transfer groups in the transfer group queue.

7. The method according to Claim 6, wherein the configuring step comprises: in the transfer group queue, configuring the transfer group with high priority that has not yet been transferred before the transfer group with low priority that has not yet been transferred.

8. The method according to Claim 6, wherein the configuring step comprises: in the transfer group queue, configuring the transfer group with high priority that has not yet been transferred after the transfer group with low priority that is in-progress.

9. The method according to Claim 1, wherein the triggering step comprises: completing the transfer of one transfer group in the transfer group queue will trigger the start of the transfer of the next transfer group.

10. A DMA PMM for managing transfer groups using a hardware-linked list, comprising: a query module, configured to sequentially query and update the transfer status of each transfer group in the transfer group queue according to the priorities of the transfer groups;
a configuring module, configured to configure the transfer group queue based on the results of the query and the priorities of the transfer groups; and a triggering module, configured to trigger the DMA to transfer the transfer group queue.

11. The DMA PMM according to Claim 10, wherein the transfer status comprises: completed transfer, in-progress transfer, and not yet transferred.

12. The DMA PMM according to Claim 10, wherein, when the DMA is idle, the triggering module is configured to: trigger the DMA to directly transfer a new transfer group.

13. The DMA PMM according to Claim 10, wherein, when the DMA is not idle, the configuring module is configured to: configure the new transfer group into the transfer group queue to wait for transfer.

14. The DMA PMM according to Claim 13, wherein the configuring module is configured to:
when the transfer group queue is empty, directly configure the new transfer group into the transfer group queue to wait for transfer.

15. The DMA PMM according to Claim 13, wherein the configuring module is configured to:
when the transfer group queue is not empty, configure the order of the new transfer group in the transfer group queue by comparing the priority of the new transfer group with the priorities of the transfer groups in the transfer group queue.

16. The DMA PMM according to Claim 15, wherein the configuring module is configured to:
in the transfer group queue, configure the transfer group with high priority that has not yet been transferred before the transfer group with low priority that has not yet been transferred.

17. The DMA PMM according to Claim 15, wherein the configuring module is configured to:
in the transfer group queue, configure the transfer group with high priority that has not yet been transferred after the transfer group with low priority that is in-progress.

18. The DMA PMM according to Claim 10, wherein in the trigger module, completing the transfer of one transfer group in the transfer group queue will trigger the start of the transfer of the next transfer group.

19. An apparatus for transferring groups, comprising:
a microcontroller unit; and
a memory storing machine-executable instructions, wherein the machine-executable instructions, when executed by the microcontroller unit, cause the microcontroller unit to perform the method according to any one of Claims 1 to 9.

20. A non-transitory machine-readable storage medium storing machine-executable instructions, wherein the machine-executable instructions, when executed by the microcontroller unit, cause the microcontroller unit to perform the method according to any one of Claims 1 to 9.
